# EUROPEAN PATENT APPLICATION

(11) **EP 1 045 471 A1**
(43) Date of publication of application: **18.10.2000**
(21) Application number: 00303172.1
(22) Date of filing: 14.04.2000
(51) Int. Cl.: H01Q 1/42, H01Q 1/32, B60R 19/52, B60R 19/48

(54) **Radar mounting structure using resin including bubbles**

(30) Priority: 16.04.1999 JP 14703099
(71) Applicant: HONDA GIKEN KOGYO KABUSHIKI KAISHA, Minato-ku Tokyo (JP)
(72) Inventor: Ashihara, Jun, Wako-shi, Saitama-ken (JP)
(74) Representative: Jackson, Robert Patrick

(57) **Abstract**

A radar mounting structure in which a radar is mounted inside a front grille through which a radio wave is transmitted and received with a sufficient radio-wave transmittance is disclosed, by which the structure, shape, and material of the front grille are not limited, and the front grille can be easily processed. The structure comprises a front grille (1) made of a resin (4) including bubbles, wherein the radar (3) is mounted in the vehicle so as to transmit and receive radio waves through the front grille. The amount of said bubbles is determined according to the desired attenuation of the radio waves.

## Description

The present invention relates to a radar mounting structure used for mounting a radar in a vehicle.

This application is based on Patent Application No. Hei 11-147030 filed in Japan, the contents of which are incorporated herein by reference.

Generally, when a radar is mounted in a vehicle so as to detect an obstacle in front of the vehicle or to measure a distance to a vehicle ahead of the present vehicle, the radar may be mounted inside a front grille so as to maintain a desirable external appearance.

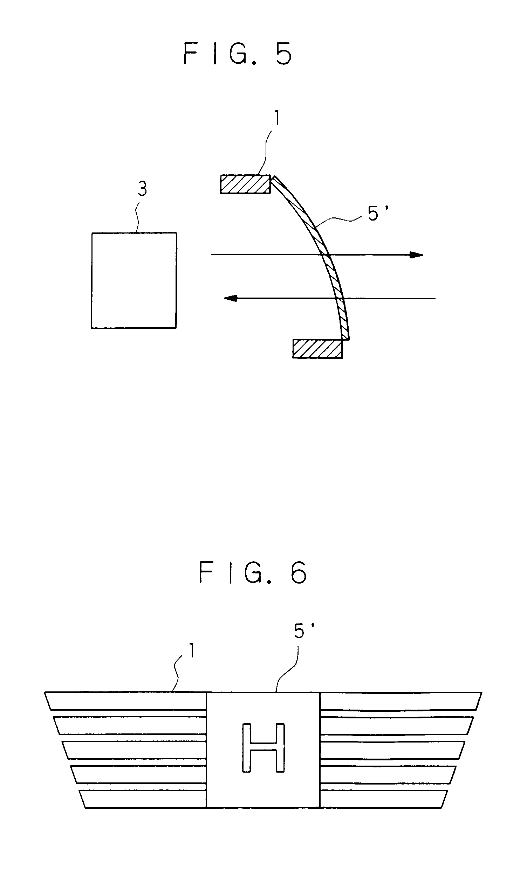

Figs. 5 and 6 are diagrams for explaining a conventional method for mounting a radar inside the front grille. In the figures, reference numeral 1 indicates a front grille. Here, a center area of the front grille, facing radar 3, is opened and plate 5' is attached to the open area. This plate 5' is made of a material having a high radio-wave transmittance, and the plate also functions as an emblem. The radio-wave transmitting and receiving operations are performed through the plate 5'.

The above method is employed for detecting an object using the radar mounted inside the front grille, but the structure and material of the front grille are limited in this method. As a result, design flexibility and processing efficiency are degraded.

In consideration of the above circumstances, an objective of the present invention, at least in a preferred embodiment, is to provide a radar mounting structure in which a radar is mounted inside a front grille through which a radio wave is transmitted and received, by which the structure, shape, and material of the front grille are not limited, and the front grille can be easily processed.

Therefore, viewed from a first aspect, the present invention provides a radar mounting structure for mounting a radar in a vehicle, comprising a front grille made of a resin including bubbles, wherein the radar is mounted in the vehicle so as to transmit and receive radio waves through the front grille.

The structure may further comprise an emblem made of a resin including bubbles, which is overlapped over the front grille so as to transmit and receive the radio wave through the front grille and the emblem.

Viewed from another aspect, the present invention provides a radar mounting structure for mounting a radar in a vehicle, comprising a front grille having an open area; and a plate made of a resin including bubbles, attached to the open area of the front grille, and wherein the radar is mounted in the vehicle so as to transmit and receive radio waves through the plate.

Accordingly, the attenuation of the radio wave can be suppressed by the bubbles, thereby transmitting and receiving the radio waves with sufficient radio-wave transmittance. In addition, the structure, shape, and material of the front grille portion are not limited.

Some preferred embodiments of the present invention will now be described, by way of example only, and with reference to the accompanying drawings in which:

Fig. 1 is a side view of an embodiment of the radar mounting structure according to the present invention.

Fig. 2 is a front view of the front grille portion of the embodiment.

Fig. 3 is a side view of another embodiment of the radar mounting structure according to the present invention.

Fig. 4 is a front view of the front grille portion of the embodiment of Fig. 3.

Fig. 5 is a side view of a conventional radar mounting structure.

Fig. 6 is a front view of the front grille portion of the conventional structure.

Hereinafter, embodiments according to the present invention will be explained with reference to the drawings.

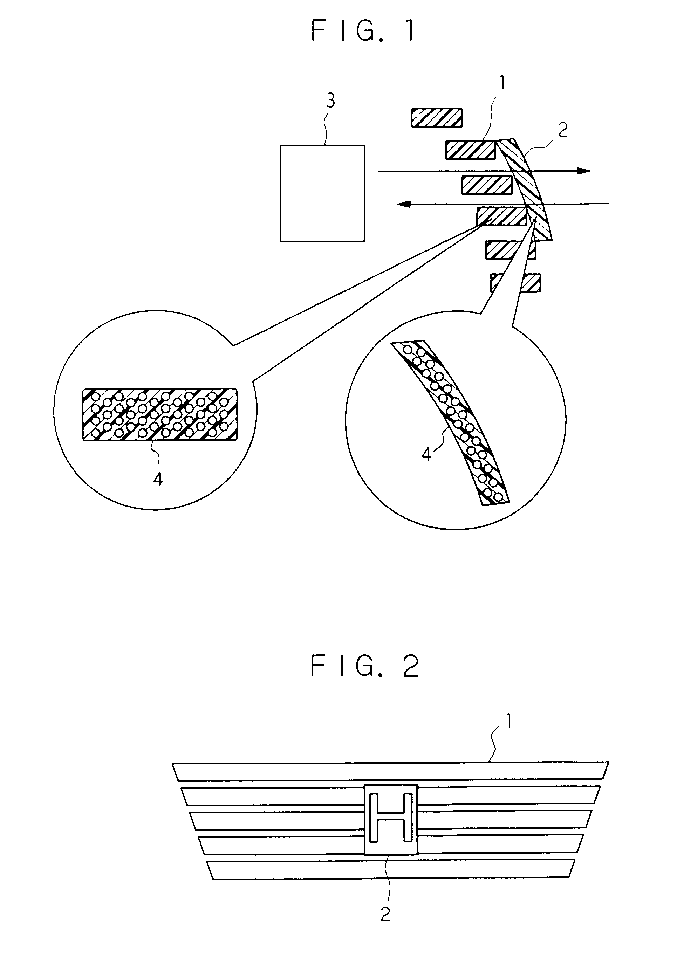

Figs. 1 and 2 are diagrams showing an embodiment of the radar mounting structure of the present invention. The embodiment relates to a general mounting structure in which emblem 2 is overlapped over a center area of front grille 1, and radar 3 is mounted inside the front grille 1. Here, the front grille 1 and emblem 2 are made of resin 4 including bubbles and the amount of said bubbles is determined according to the desired attenuation of the radio waves.

Radar 3 is provided in a center portion of the vehicle so as to detect an obstacle in front of the vehicle or to measure a distance to a vehicle ahead of the present vehicle, under the most optimal conditions.

According to the above structure, when the radio wave is transmitted or received through the front grille 1 and emblem 2, the bubbles included therein minimize the attenuation of the radio waves.

Resin 4 including bubbles may be a foamed resin, or a hollow or honeycomb resin.

Therefore, by merely forming the front grille 1 and emblem 2 using resin 4 including bubbles, the radio-wave transmitting and receiving operations can be performed with a sufficient radio-wave transmittance, regardless of the shape of the portion including the front grille 1 and emblem 2.

The material of resin 4 itself (in which bubbles are not included) is not limited, that is, even a resin originally having insufficient radio-wave transmittance can be employed; thus, the flexibility for selecting a material can be improved, for example, weather-resistant or unfading materials, or various colored materials may be used.

The emblem 2 may not be attached to the front grille 1, and in this case, the radio wave is transmitted or received by radar 3 only through the front grille 1.

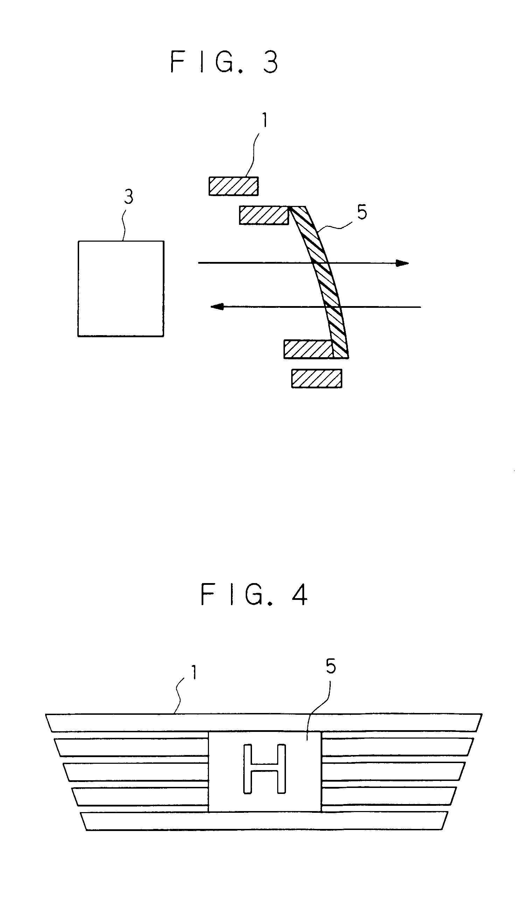

Figs. 3 and 4 show another embodiment according to the present invention.

In this case, a center area of the front grille 1, facing radar 3, is opened and plate 5 is attached to the open area. This plate 5 is made of resin 4 including bubbles, and the plate also functions as an emblem. The radio-wave transmitting and receiving operations are performed through the plate 5.

According to this structure, it is unnecessary to form the plate 5 by using a material having a high radio-wave transmittance; thus, the flexibility for selecting a material can be improved. In addition, plate 5 may be separately attached to front grille 1, or the front grille 1 and plate 5 may be integrally formed using resin 4 including bubbles.

## Claims

1. A radar mounting structure for mounting a radar (3) in a vehicle, characterized by comprising a front grille (1) made of a resin (4) including bubbles, wherein the radar is mounted in the vehicle so as to transmit and receive radio waves through the front grille.

2. A radar mounting structure as claimed in claim 1, characterized by further comprising an emblem (2) made of a resin (4) including bubbles, which is overlapped over the front grille so as to transmit and receive the radio waves through the front grille and the emblem.

3. A radar mounting structure for mounting a radar (3) in a vehicle, characterized by comprising:
a front grille (1) having an open area; and
a plate (5) made of a resin including bubbles, attached to the open area of the front grille, and
wherein the radar is mounted in the vehicle so as to transmit and receive radio waves through the plate.

4. A radar mounting structure as claimed in any one of claims 1 to 3, wherein the amount of said bubbles is determined according to the desired attenuation of the radio waves.

5. A radar mounting structure for mounting a radar (3) in a vehicle, comprising a front grille (1) made of a resin (4) including a large number of bubbles, wherein the radar is mounted in the vehicle so as to transmit and receive radio waves through the front grille and said bubbles minimize the attenuation of the radio waves as they pass through the resin forming the front grille.

6. A radar mounting structure as claimed in claim 5, wherein an emblem (2) made of a resin (4) including a large number of bubbles is overlapped over the front grille and the radio waves are transmitted and received through the front grille and the emblem, and said bubbles minimize the attenuation of the radio waves as they pass through the resin forming the front grille and the emblem.

7. A radar mounting structure for mounting a radar (3) in a vehicle, comprising:
a front grille (1) having an open area;
a plate (5) made of a resin (4) including a large number of bubbles, attached to the open area of the front grille;
wherein the radar is mounted in the vehicle so as to transmit and receive radio waves through the plate; and
said bubbles minimize the attenuation of the radio waves as they pass through the resin forming the plate.
